# EUROPEAN PATENT SPECIFICATION

(11) **EP 2 007 656 B1**
(45) Date of publication and mention of the grant of the patent: **25.01.2012**
(21) Application number: 07716052.1
(22) Date of filing: 14.03.2007
(51) Int. Cl.: B65D 90/00, B60P 7/13, B63B 25/24

(54) **A COUPLING DEVICE AND A METHOD FOR ENABLING SIMULTANEOUS LIFTING OF TWO CONTAINERS.**
VERBINDUNGSVORRICHTUNG UND VERFAHREN ZUM GLEICHZEITIGEN ANHEBEN ZWEIER BEHÄLTER
DISPOSITIF ET PROCÉDÉ DE COUPLAGE PERMETTANT DE SOULEVER SIMULTANÉMENT DEUX CONTENEURS

(30) Priority: 18.04.2006 SE 0600848
(43) Date of publication of application: 31.12.2008
(73) Proprietor: Cargotec Finland Oy, 33101 Tampere (FI)
(72) Inventor: BOHMAN, Hans, 112 65 Stockholm (SE); KARLSSON, Torbjörn, 177 59 Järfälla (SE)
(74) Representative: Östergren, Markus
(86) International application number: PCT/SE2007/000234
(87) International publication number: WO 2007/120093

(56) References cited:
- WO-A1-96/15052
- WO-A1-2005/054086
- WO-A1-2005/097626
- DE-A1- 4 307 781

## Description

### Technical field of the invention

The present invention relates to a method for enabling simultaneous lifting of two containers interconnected with a coupling device, wherein said coupling device comprises two engaging portions adapted to each be at least partially inserted into a corner fitting of a respective container, wherein said coupling device is provided with an automatic condition, in which automatic condition said engaging portions are adapted to engage said corner fitting for holding said coupling device in said corner fitting and wherein said coupling device further is adapted to upon a prescribed relative movement between said containers allow removing of at least one of said engaging portions from its respective corner fitting.

The present invention also relates to a coupling device to be used in such a method.

### Background Art

When transporting goods, for instance, on cargo ships, trains and trucks, part-load, freight and thermo-containers are used to a great extent. Such containers are easy to handle in loading and unloading due to standardized sizes and a robust construction that allows stacking of a plurality of containers on top of each other. Stacking of containers also occurs in storing of goods in containers. This design of containers, which are often referred to as ISO containers, allows the transported goods to be well protected in transport and also in loading and unloading.

Containers of the type described above are usually rectangular with floor, roof, two sidewalls and two end walls. One end wall usually consists of a door portion that is often formed as a pair of doors, each door of the pair of doors being hinged to opposite edges of the end wall in question. Corner fittings with oval holes are usually arranged at the corners of the container and supports connecting and lashing of containers.

To connect and lash two or more containers, use is made of equipment comprising a coupling that can be inserted into an opening arranged on a corner fitting of an ISO container. Such couplings usually have a locking mechanism to securely lock the coupling device in the corner fitting of the container.

Several types of coupling devices exist (WO 2005/097626 A1; WO 2005/054086 A1; DE 43 07 781A1; WO 96/15052 A1). One type of coupling devices are so called "fully automatic" coupling devices, which is a coupling device that is designed to be inserted into a first corner fitting and thereafter inserted and/or taken out of a second corner fitting of a container without the need for manual locking or unlocking. Different constructions of "fully automatic" coupling devices exist, for instance, where the containers have to be slightly turned, rotated, sheared or tilted when removed from each other in order to bring the "fully automatic" coupling device out of engagement with at least one of two containers stacked on top of each other. Advantages with fully automatic coupling devices is the reduced need for manual operation during loading and unloading of containers. The reduced need for manual operations results both in a reduced need for labor and a reduced time for stowing of containers, as compared to when utilizing coupling devices which needs to be manually operated. This in turn results in cost savings.

Lockable couplings, of the fully automatic types, may for example be provided with one or two locking portions designed as spring-loaded helical cones, which are adapted to be moved and rotated into locking engagement with corner fittings of ISO containers. The two helical cones are often connected by means of a shaft portion that is rotatably mounted in a housing. This kind of coupling devices is usually referred to as "twist-locks" and may be "fully automatic". Another coupling device of the above-mentioned types is a coupling device where one or both of the engaging portions are non-rotational elements. The engaging portion may then be shaped as a protruding portion, e.g. a nose or a catch, which may be either fixed or movable. The protruding portion may during use be brought into the corner fitting and abut against the inner side of the wall of the corner fitting. Also this kind of coupling devices may be "fully automatic".

Sometimes, e.g. when arranging containers at a stowage site such as a harbor, it may be preferred to lift two interconnected, one above the other, containers simultaneously. This may be useful in order to reduce the time for arranging the containers at a stowage site, and hence reduce the cost for stowing. Such lifting may occur by a stevedore lifting, with a crane, the top container, and the lower container is then intended to be lifted as well by the coupling devices securing the containers. If the containers are not satisfactorily secured, the containers may then be unintentionally separated during the lift. This is not only undesired but also hazardous for personnel at and around the stowage site. Furthermore, the containers, the items in the containers and/or the coupling devices may be damaged which may be costly since they may need to be repaired and/or replaced. It may also result in a pro-longed stowage time, which contrasts the intention behind lifting two interconnected containers simultaneously.

Hence, there exists a need for a "fully automatic" coupling device that does not loose its engagement with either container during simultaneous lifting of two interconnected stacked containers.

### Summary of the invention

An object of the present invention is to provide a coupling device for fastening of containers that does not loose its engagement when two interconnected containers are lifted simultaneously.

The above object and other objects that will be evident from the following description are achieved by a coupling device to be connected to a corner fitting of a container according to the appended claims.

According to a first aspect, the present invention comprises a method for enabling simultaneous lifting of two containers interconnected with a coupling device, wherein said coupling device comprises two engaging portions each adapted to be at least partially inserted into a corner fitting of a respective container, wherein said coupling device is provided with an automatic condition, in which automatic condition said engaging portions are adapted to engage said corner fitting for holding said coupling device in said corner fitting and wherein said coupling device further is adapted to upon a prescribed relative movement between said containers allow removing of at least one of said engaging portions from its respective corner fitting, said method comprising the steps of:
- interconnecting said containers by means of said coupling device;
- manually activating a means as defined in claim 1 for alternating said coupling device between said automatic condition and a locked condition, in which locked condition said containers will remain interconnected.

Lashing of two containers in the above-described manner fulfills the intended object of the present invention. Utilizing a coupling device with an automatic condition for lashing two containers together gives several advantages relating to time for loading and unloading and consequently cost for loading and unloading. By activating means which brings the coupling device to a locked condition from an automatic condition, simultaneous lifting of two interconnected containers becomes possible. By this, it is possible to lift two interconnected containers simultaneously, when the coupling device has been altered to its locked condition, even if the prescribed movement for separating the containers, when the coupling device is positioned in its automatic condition, is performed. Hence, the inventive method reduces the risks for danger and potential costs that may be present when performing simultaneous lifting of two interconnected containers that is not secured with the inventive method.

With the inventive method, it may also be possible to alter condition from locked to automatic. By this, the advantages of an automatic coupling device may be obtained when no simultaneous lifting of containers is intended to be performed.

Preferably, said activating of said means adapted for alternating said condition of said coupling device is executed when said second engaging portion has been inserted into said second corner fitting.

It may be advantageous to perform the method in such a manner that the second engaging portion of the coupling device is first inserted into a corner fitting, and thereafter the means for alternation of condition from automatic to locked, or vice versa, is activated.

According to the present invention, said coupling device comprises maneuvering means, and said method comprises manual maneuvering for alternation of condition between said automatic condition and said locked condition of said coupling device.

According to one aspect, an operator may alter the condition of the coupling device by means of the said maneuvering means. It may further be preferred that the operator first inserts the second engaging portion of the coupling device into a corner fitting and thereafter maneuvers the maneuvering means in order to alter the condition from an automatic to a locked condition, or vice versa.

Suitably, at least one of said first and second engaging portions of said coupling device is rotating during removal of said engaging portion from said corner fitting.

One type of automatic coupling devices is designed such that at least one of the first and second engaging portions rotates during removal of that engaging portion from a corner fitting. The inventive method may be performed when utilizing such a coupling device.

It may be preferred that said maneuvering of at least one of said first and second engaging portions to a locked condition from an automatic condition comprises rotating said engaging portion in the opposite direction from that which said engaging portion is subject to during removal of said engaging portion from said corner fitting. It may further be preferred that said rotation of said engaging portion in said direction opposite that direction in which said engaging portion is rotating during removal of said engaging portion from said corner fitting positions said engaging portion such that rotation is prevented in the removing direction when an external force is exerted upon said engaging portion.

The type of coupling devices in which at least one of the engaging portions rotates during removal of that engaging portion from a corner fitting usually have a geometry which enables the combination of holding the coupling secure in a corner fitting for lashing purposes and also allows removal of the engaging portion upon a prescribed relative movement between the containers which the coupling device lashes. By utilizing a method in which the coupling device is maneuvered in a forced rotation in a direction opposite that direction the engaging portion rotates when removed, the part of the engaging portion which comprises the geometry which allows removal of the engaging portion will be positioned differently in relation to the corner fitting, compared to its position in the automatic condition. By this, the coupling device may not be able to perform the necessary rotation for removal from the corner fitting, even if the prescribed relative movement between the containers is performed, and hence the coupling device has been maneuvered to a locked condition.

Alternatively, said coupling device is arranged with an orientation means, wherein said method further comprises orientation of said coupling device in a corner fitting for obtaining the desired condition automatic or locked.

According to another aspect, said coupling device comprises orientation means, which affects the condition, i.e. automatic or locked, of the coupling device. By this, an operator may, when inserting the coupling device into a corner fitting, decide which condition the coupling device should be arranged in, by orientating the coupling device in the desired orientation.

According to a another aspect of the present invention, said activating of said means adapted for alternating said condition between automatic and locked of said coupling device is executed when said first engaging portion of said coupling device is inserted into said first corner fitting.

It is rather common to insert the first engaging portion of a coupling device into a corner fitting first, and thereafter insert the second engaging portion into a another corner fitting. It may therefore, e.g. when the coupling device comprises orientation means, be preferred that the activation of the means for alternating of condition of the coupling device is executed when for example an operator inserts the first engaging portion of the coupling device into a corner fitting.

Preferably, said method further comprises arranging said two containers vertically in relation to each other, such that said coupling device is engaged into a lower corner fitting of an upper container and an upper corner fitting of a lower container.

Preferably, said method further comprises lifting of a top container by means of a crane, wherein at least one interconnected lower container is lifted due to said interconnection between said upper and lower containers.

The inventive method is useful when utilized in lashing two containers arranged on top of each other. Two containers arranged in this manner and secured by the method disclosed, are able to be simultaneously lifted.

According to a second aspect of the present invention, a coupling device is provided for use in the method disclosed above. Said coupling device comprises at least a first and a second engaging portion, wherein said first and second engaging portions are adapted to be inserted into respective first and second corner fittings provided on a first and a second container, respectively, wherein said coupling device has an automatic condition, wherein in said automatic condition at least one of said first and second engaging portions is arranged to engage a corner fitting for holding said coupling device in said corner fitting and wherein at least one of said engaging portions upon a prescribed relative movement between said containers being removable from its corner fitting, wherein a manual means is provided for alternation of condition of said coupling device between said automatic condition and a locked condition, wherein at least one of said engaging portions of said coupling device will remain engaged with said corner fitting when arranged in said locked condition.

A coupling device with an automatic condition has several advantages relating to time for loading and unloading and consequently coat for loading and unloading of containers. By providing means for alternation of condition from automatic to locked of the coupling device also gives the benefits of enabling simultaneous lifting of two interconnected containers without the risk that the coupling device looses its engagement with either container. By this, it is possible to lift two interconnected containers simultaneously, when the coupling device has been altered to its locked condition, even if the prescribed movement for separating the containers, when the coupling device is positioned in its automatic condition, is performed. The coupling device described may advantageously be utilized in the method for securing two containers which is disclosed above.

Preferably, at least one of said first and second engaging portions is arranged for rotation during removal from a corner fitting, wherein said means for arranging said coupling device in a locked condition is arranged to prevent said rotational movement of at least one of said first and second engaging portions.

One type of automatic coupling devices is designed such that at least one of the first and second engaging portions rotates during removal of that engaging portion from a corner fitting. By preventing this rotational movement, the engaging portion will be hindered from loosing its engagement with the corner fitting.

One design of coupling devices in which a rotational movement is utilized for separating the engaging portion from the corner fitting comprises a housing, wherein said second engaging portion is rotably mounted in relation to said housing by means of a shaft portion extending into the housing, wherein said second engaging portion has a guide part for guiding the engaging portion with said corner fitting, wherein said guide part having a translation guide path for guiding the engaging portion in relation to said corner fitting in a horizontal direction, which translation guide path is rotational asymmetric in relation to an axis of said shaft portion, and wherein said guide part having a rotational guide path for rotation of the engaging portion.

Maneuvering means are provided for alternating said coupling device between said locked condition, in which said rotational movement of said second engaging portion is prevented and said automatic condition, in which said rotational movement of said second engaging portion is allowed.

According to one aspect of the present invention, the coupling device comprises maneuvering means such that the maneuvering means may be maneuvered by an operator even when the coupling device is secured in two corner fittings of two containers, respectively.

According to one aspect of the present invention, said maneuvering means is arranged to rotate said second engaging portion such that at least one substantially horizontal surface of said second engaging portion is directed towards an inner surface surrounding an engagement opening of said corner fitting, for achieving said locked condition.

By arranging the maneuvering means in this order it is possible to alter the condition of the coupling device from automatic to locked. The geometry of the second engaging portion, comprising the guide parts and paths, may by this maneuvering become positioned such that the guide parts and paths will not be able to guide the engaging portion in the desired manner for removal of the second engaging portion from the corner fitting. The substantially horizontal surfaces of the second engaging portion will not, even when a force acts upon the containers in the prescribed manner for separation of the containers, bring the second engaging portion to rotation.

Alternatively, said coupling device comprises a locking device, wherein said locking device being fixed arranged in relation to said coupling device, and engagement means, wherein said engagement means is rotatably arranged in relation to said locking device, wherein said alteration of condition between automatic and locked condition of said coupling device is obtained when said maneuvering means prevents the rotation of said engagement means.

It may be preferred to utilize a locking device and engagement means in order to fulfill the desired functionality of the coupling device, i.e. be able to arrange the coupling device in a locked condition and alter condition between automatic and locked, and vice versa.

Said engagement means may further be arranged in relation to an upper portion of an axle arranged in relation to at least one of said first and second engaging portions for rotation therewith, wherein the relative angular position of said engagement means and said axle portion is variable, wherein said engagement means is arranged to engage said locking device depending on the angular position of said engagement means in relation to said axle portion. Preferably, said maneuvering means affects the angular position of said engagement means in relation to said axle portion by limiting the rotation of said engagement means.

When a movement of at least one of the first and second engaging portions occurs, the engagement means may rotate in conjunction with the axle connecting the engagement means and at least one of the engaging portions. However, if the engagement means is prevented in its rotation by the maneuvering means, the angular position of the engagement means in relation to the axle will vary. When the angular position of the engagement means is altered they will engage the locking device and further movement will be prevented, and hence, the second engaging portion will not be able to rotate sufficiently in order to be removed from the corner fitting. A locked condition of the coupling device is thereby established.

According to another aspect of the present invention, said coupling device is provided with orientation means, wherein said orientation means may activate said prevention of said rotation of said second engaging portion depending on the orientation of said coupling device in a corner fitting.

It may be preferred to provide the coupling device with orientation means which, depending on the orientation of the coupling device in a corner fitting, activates or not activates the means for alternation of condition of said coupling device. By this, an operator may, when inserting the coupling device into a corner fitting, decide which condition the coupling device should be arranged in by orientating the coupling device in the desired orientation. With orientation means, an operator may not have to maneuver a maneuvering means for alternating the condition of coupling device.

It is also possible to apply this inventive concept to other kind of automatic coupling devices, e.g. hooks, sloping surfaces etc. This could for example be performed as movable parts, surfaces or tilting/rotation of the entire hook/engagement part.

With the method and coupling device according to the invention is all unintentional disconnection of the coupling device prevented in the locked condition.

### Brief description of the drawings

Preferred embodiments of the present invention will in the following be described in more detail with reference to the accompanying exemplary drawings, in which:
Fig 1a shows in perspective view a coupling device according to a first embodiment of the present invention, with one side of the housing removed;
Fig 1b shows in side view a part of a coupling device according to the present invention with the housing removed;
Fig 2a shows two containers stacked on top each and their respective corner fittings;
Fig 2b shows in perspective view a coupling device according to the invention, engaged with a first corner fitting;
Fig 3a shows in perspective view a coupling device according to a first embodiment of the present invention arranged in corner fittings in an automatic condition;
Fig 3b shows in perspective and side view a coupling device according to a first embodiment of the present invention arranged in corner fittings in a locked condition;
Fig 4a shows in perspective view a coupling device according to a second embodiment of the present invention in an automatic condition;
Fig 4b shows in perspective view a coupling device according to a second embodiment of the present invention in a locked condition;
Fig 5a shows in side view a coupling device according to a third embodiment of the present invention, arranged in a corner fitting in an automatic condition;
Fig 5b shows in perspective view, and partly in cross-section, a coupling device according to a third embodiment of the present invention, arranged in a corner fitting in an automatic condition;
Fig 5c shows in side view a coupling device according to a third embodiment of the present invention, arranged in a corner fitting in a locked condition;
Fig 5d shows in perspective view, and partly in cross-section, a coupling device according to a third embodiment of the present invention, arranged in a corner fitting in a locked condition;

### Detailed description of preferred embodiments of the present invention

The invention will now for the purpose of exemplification be described in more detail by means of examples and with reference to the accompanying drawings.

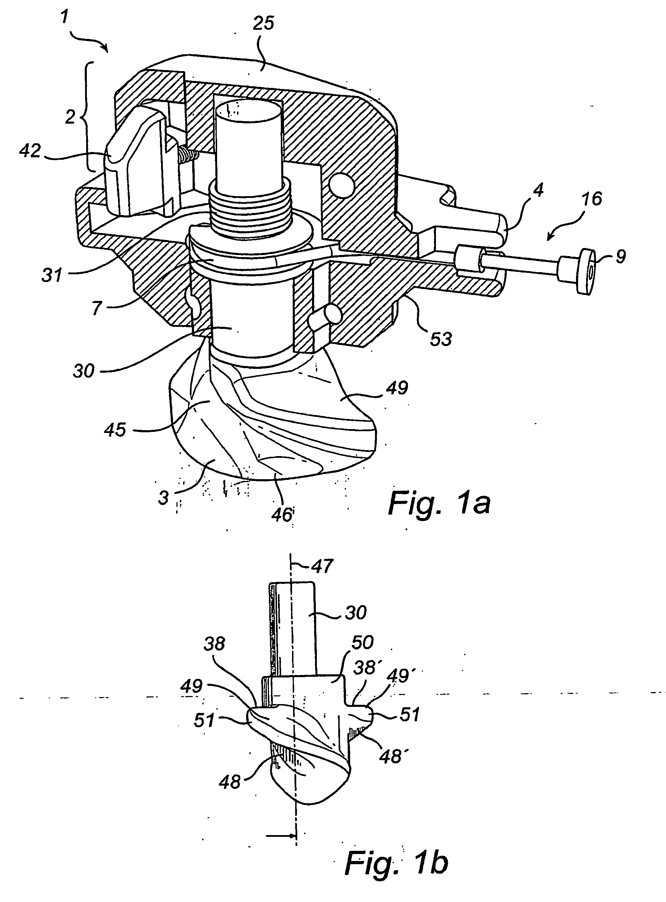

An embodiment of a coupling device 1 according to the invention to be connected to existing corner fittings of an ISO container is shown in figures 1a and 1b. The coupling device 1 comprises a housing 25 and a spring-loaded engagement means 42. The upper portion of the housing 25 and the engagement means 42 constitutes a first engaging portion 2 which is at least partially insertable into a first corner fitting 26. The coupling device 1 further comprises a second engaging portion 3, which is at least partially insertable into and releasable from a second corner fitting 28. The second engaging portion 3 is rotably mounted in the housing 25 by the shaft portion 30 extending into the housing 25.

The second engaging portion 3 has a guide part 45 for guiding the engaging part with said corner fitting, the guide part 45 has a shape with a core 46 eccentrically located in relation to the axis 47 of the shaft 5. Further are two screw-shaped flanges radially protruding from the core 46, with a first upper guide surface 48,48' and a second lower guide surface 49,49'. The flanges are peripherally sloping and narrowing in radial direction downwards. The angle of the sloping rotational guide surfaces need to be large enough to avoid self-locking with the edge of the hole during rotation of the second engaging portion 3.

The guide part 45 may be provided with cam portion 50, the eccentric part of the cam 50 has essentially the same extending direction as the eccentricity of the guide part 45, in relation to the axis 47 of the shaft 30.

The screw-shaped flange of the guide part 45 can be described as a double acting twist cone, which is asymmetric oriented in relation to the rotation axis of the second engaging portion 3. The double acting twist cone drives, in the automatic condition, the second engaging portion 3 to rotate both during engaging and release of the coupling 1 with the corner fitting, wherein the vertical movement of the coupling 1 partly is transformed to a forced rotation of the engaging portion 3. The eccentricity and the cam 50 cooperates during unloading of a container to force the container to move in a sideway direction. On the other hand the cam 50 and the eccentric twist cone acts in a different way during loading since the rotation is in the opposite direction.

The coupling device 1 further comprises a section 4 arranged between the two engaging portions 2,3. This section 4 is, in use, arranged to be positioned between the two stacked containers 27,29, and hence, creates a space between the two containers.

There is also a chamfer 53 provided at the lower part of the section 4 to permit the coupling 1 to move upwards and sideway, during unloading in the automatic condition.

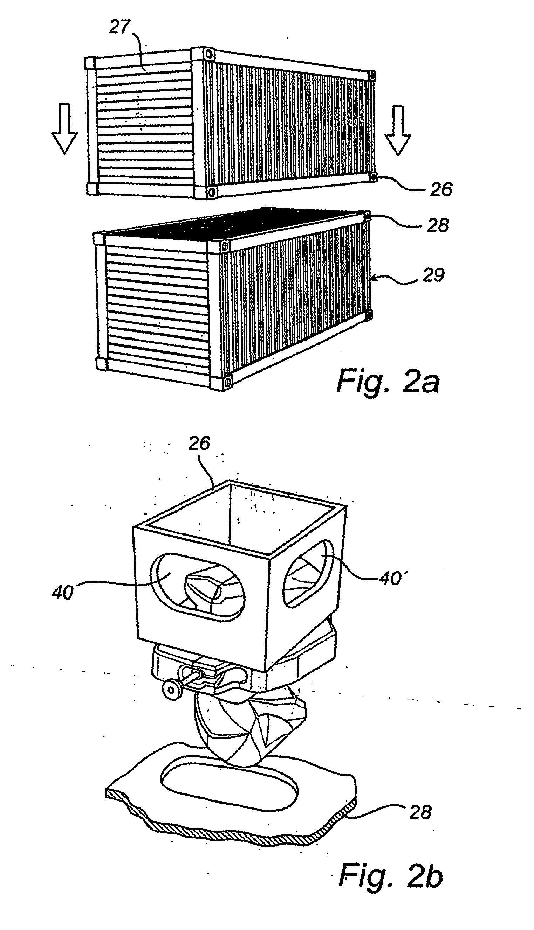

During stacking of one container on top of another container, which may be seen in fig 2a, the first engaging portion 2 of coupling devices according to the invention are usually mounted in the holes of the four lower corner fittings 26 of the first container 27 to be loaded. The design of the housing 25 and the engagement means 42 allows the coupling device to be securely held in the corner fitting 26. A crane or other lifting device lifts the first container 27 above the second container 29 and the first container 27 is lowered straight down on to the second container 29. During lowering of the first container 27 the second engaging portion 3 of the coupling device 1 will rotate clockwise, seen from below, due to the contact between the edges of the hole and the rotation guide path of the second engaging portion 3. The guide part 45 will perform a rotation and a longitudinal movement. This is since the core 46 of the guide part 45 is eccentrically located from the rotation axis 47 of the shaft 30. Since the guide part 45 moves generally in the oblong direction of the hole the first container can be lowered vertically straight down onto the second container during engagement between the second engaging portion 3 and the hole of the upper corner fitting 28 of the second container 29.

When the first container is lowered from this position the second engaging portion 3 will start to rotate due to the pitch of the guide surface, which will be guided in the hole.

During the final stage of coupling of two containers when the guide part 45 of the second engaging portion 3 has entered the corner fitting completely the spring 31 will rotate the second engaging portion 3 back to the neutral position and hence lock the first and second container together, this is since the guide part 45 is eccentrically positioned, but also since the guide part 45 has an oblong shape, in a horizontal cross section, that can not pass direct through the oval hole of the corner fitting.

Consequently the loading and connection of two containers to each other can be performed fully automatic, due to the described automatic condition.

It is possible to use a combination of the surfaces of the cam 50 and the surfaces of the screw 51 as translation guide path for guiding the engaging part in relation to a corner fitting in a horizontal direction.

If the containers are, unintentional, pulled apart this will be prevented by the cam 50 comes in contact with one long side edge of the hole, and further the rotational guide path.

During unloading, in the automatic condition, a lifting device is used for lifting the first container 27 from the second container 29 with the prescribed relative movement. During lifting of the first container and the four coupling devices 1 the pitch of the second guide surface 49 of the guiding part 45 will cause the second engaging portion 3 to rotate in a counter clockwise direction, seen from below. When the second engaging portion rotates the translation path of the cam 50 will interact with the long side of the hole and push the housing 25 side ways. Due to the eccentrically located core 46 of the guide part 45, the housing 25 and the first container 27 will be forced to move with a horizontal component in a direction parallel to the short side of the container during unloading.

The coupling devices 1 will follow the lifted container since they are coupled in the corner fittings 26 of the first container 27 by use of the first engaging portion 2. All four couplings will move upwards and side ways at the same time, and they will await each other if necessary.

During release of a coupling 1, in the automatic condition, the pitch of the guide surface 49 of the guide part 45 converts the vertical lifting movement to a driving rotation of the second engaging portion 3, and this driving rotation is used by the geometry of the guiding part 45 to force the housing 25 in a direction with a horizontal component, and further to achieve the prescribed relative movement.

When the first container is released and the second engaging portion 3 of the coupling 1 is out of engagement from the hole of the corner fitting the spring 31 will rotate the second engaging portion back to the neutral position.

The neutral rotation position is achieved by a spring 31 acting on the shaft 30, and if makes the second engaging portion 3 return to the neutral position from a rotated position both clockwise and counterclockwise from the neutral position.

In order to perform a vertical tandem lift of two or more containers interconnected with a coupling device 1 of the above described type, or with any other type of fully automatic coupling devices, it may be necessary to be able to at least temporarily eliminate the fully automatic feature of the coupling device 1.

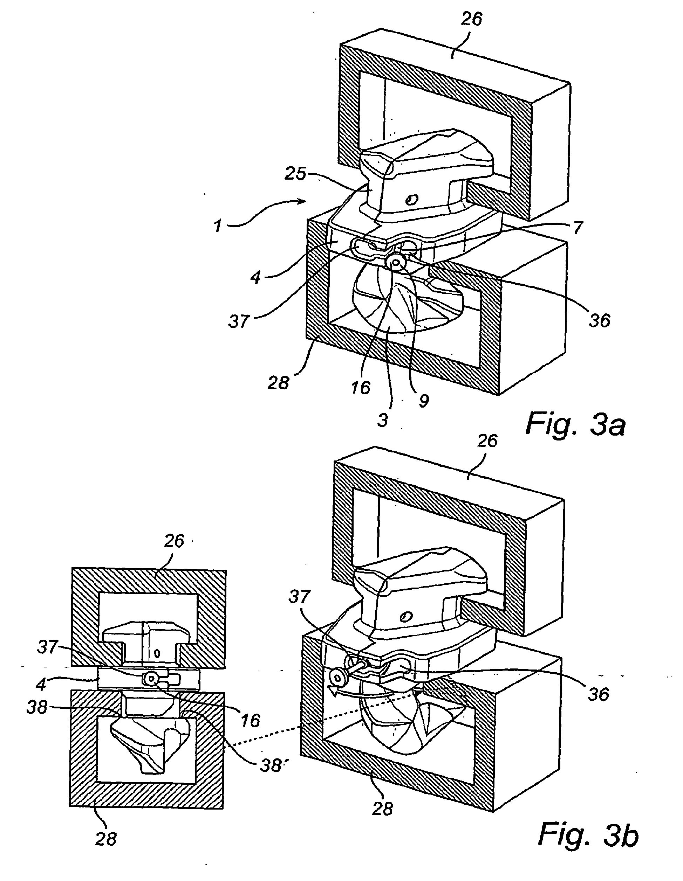

According to a first embodiment of the present invention, shown in figs 1, 3a and 3b, a coupling device 1 comprising a maneuvering means 16 arranged in relation to the second engaging portion 3 may achieve this temporary elimination of the fully automatic feature. As may be seen in figs 1, 3a and 3b , the maneuvering means 16 according to this embodiment comprises a wire 7 and an end knob 9. The wire 7 is attached to the axle 30, which in turn is attached to the second engaging portion 3. As may also be seen in figs 3a and 3b, the section 4 of the housing 25 comprises two interconnected openings 36 and 37, through which the wire 7 may extend and the end knob 9 is positioned outside the housing 25. Due to the interconnection between the two openings 36,37, the maneuvering means 16 may be brought between two different conditions. When the wire extends through the first opening 36, as in fig 3a, the coupling device 1 is in its fully automatic condition. The maneuvering means may alternatively be designed as a button or other suitable mechanism.

However, if an operator such as a stevedore alters the position of the maneuvering means 16 such that the wire 7 extends through the second opening 37, as may be seen in fig 3b, the second engaging portion 3 will be forced to rotate clockwise, seen from below. This forced rotation brings two substantially horizontal surfaces 38, 38' of the coupling device 1 to be directed towards, or be in contact with, surfaces surrounding the oval hole of the corner fitting 28 of the second container 29. In the locked condition the guide path is not in contact, or will come in contact with the corner fitting 28 if a force acts upon either of the containers 27,29 or the coupling device 1, the fully automatic condition of the coupling device 1 is disabled. Hence, the coupling device 1 is now positioned in a locked condition and it may be possible to lift two interconnected containers, even with the prescribed movement for disengaging the coupling device 1, without disengaging the second engaging portion 3 from the corner fitting 28.

In order to alter the condition of the coupling device 1 back to the automatic condition, an operator has to maneuver the maneuvering means 16 back to the first opening 36.

The maneuvering means 16 has in this embodiment been described comprising a wire. This is however not necessary and any suitable means for enabling alteration of the condition of the second engaging portion 3 may be utilized.

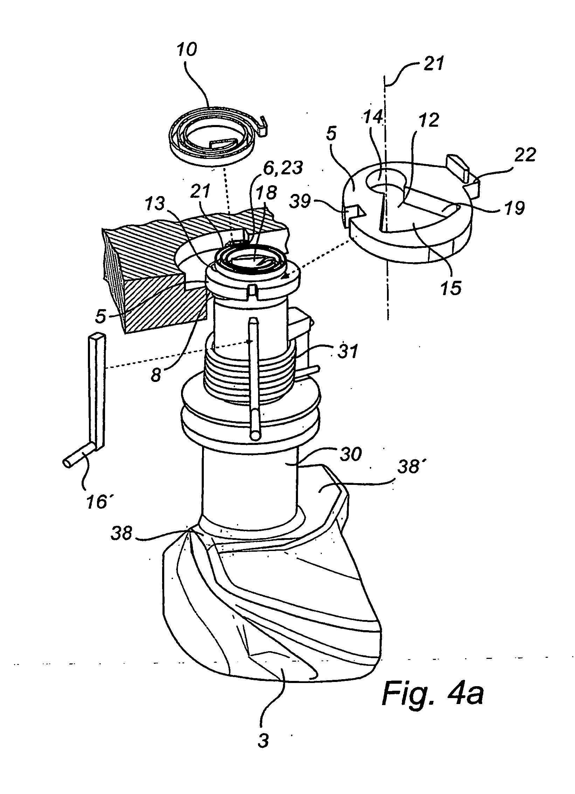

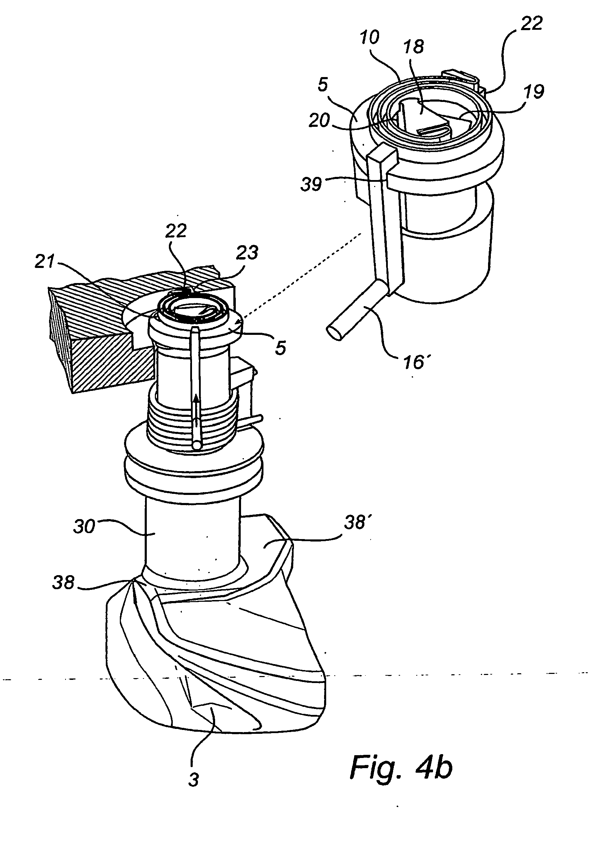

A second embodiment of the present invention is shown in figs 4a to 4b. In this embodiment, the coupling device 1 further comprises a washer 5 arranged in the housing 25. The washer 5 is rotatably arranged in relation to an upper portion 8 of the axle 30. The washer 5 comprises a locking tooth or engagement means 22, and a corresponding locking device 6 is provided in the housing 25.

The locking device 6, which in this embodiment comprises a lock lug 23, is fixedly arranged in relation to the housing 25 of the coupling device 1. In this embodiment, the lock lug 23 is made as an integral part of the housing 25. The lock lug 23 is positioned in the same central plane as the locking tooth 22 of the washer 5, wherein said central plane extends in a direction perpendicular in relation to the longitudinal axis of the axle portion 8. The arrangement is such that the locking tooth 22 of the washer 5 may be brought into engagement with the lock lug 23 of the locking device 6.

The upper portion 8 of the axle 30 has a shape which, when viewed in top-view, is similar to a keyhole, i.e. a substantially circular part 13 and an elongate part 18, which is shaped as a part of a circle, extending at substantially opposite sides of the upper portion 8 of the axle 30. The washer 5 is arranged with an aperture or a through hole 12 with a circular portion 14 corresponding to the circular part 13 of the axle portion 8. This means that the key shaped part (13 and 18) of the axle portion 8 extends into the aperture in such a way that the circular portion 14 of the aperture is filled by the circular part 13 of the axle portion 8 to provide an axis of rotation 21 of washer 5, and hence locking tooth 22, which is eccentric in relation to the axis of the axle 30, and consequently axle portion 8. A part 18 of axle portion 8 is designed in a somewhat elongate manner and extends into the aperture portion 15 which extends from the circular part 13. The part 18 fills only approximately half of the portion 15 of aperture 12 when viewed in axial direction of the washer 5 and provides for a limited angular movement of washer 5.

Spring means 10 is arranged in relation to the washer 5 and the axle 30 in such a manner that the washer 5 and the axle 30 will rotate in conjunction, as long as the force acting upon the axle 30 is not to sudden or to strong so that it overcomes the spring force holding the washer 5 and the axle portion 8 in their initial relative positions, or as long as no external force prevents the rotation of washer 5.

Further, maneuvering means 16' which, when activated, obstructs the movement of the washer 5 is arranged in relation to the housing 25. The maneuvering means 16' comprises a lever which may be brought into engagement with a recess 39 at the washer 5. An end of the maneuver ing means 16', which is arranged to be maneuvered by an operator, is extending from the section 4 (not shown) of the housing 25 (not shown) which in use is positioned between the two stacked containers 27,29.

The second embodiment of the present invention will now be described in function. In a neutral position, the elongate part 18 is, due to the effect of spring means 10, positioned against a sidewall 19 of the aperture 15. In this condition the locking tooth 22 and the lock lug 23 are not in engagement with each other. Hence, the washer 5 is free to rotate when the axle 30 rotates. If the axle 30 is rotated in a sufficiently slow manner, i.e. a movement that does not exceed the spring force holding the elongate part 18 towards the sidewall 19, or if the washer 5 is not obstructed in its movement by the maneuvering means 16', the washer 5 will rotate in conjunction with the axle 30. Hence, the necessary rotation of axle 30 and second engaging portion 3 for inserting and removing the second engaging portion 3 from a corner fitting 28 is achievable.

For an operator to be able to prevent the movement of the second engaging portion 3 in relation to the first engaging portion 2, maneuvering means 16', or a manual locking lever, is provided. When manual locking by the maneuvering means 16' is established, the washer 5 is limited in its jointly rotation with the axle portion 8. Hence, when the axle portion 8 rotates, the washer 5 is held by the lever and, consequently, the spring means 10 is extended and the rotational axis 21 of the washer is repositioned in relation to the axle portion 8. When the washer 5 thereafter rotates it will rotate around its axis 21, which is now in a new relative position in relation to the axle 30 because of the rotation of axle 30 and upper axle portion 8. As a result, the locking tooth 22 of the washer 5 will undergo a short displacement and come into contact with the lock lug 23, which leads to an immediate locking of the axle 30 of the coupling device 1 and prevents further relative movement of the engaging portions 2,3, e.g. further rotation of the second engaging portion 3.

In the above-described embodiment, the locking device 6 and the engagement means 22 have been described comprising a lock lug and a locking tooth, respectively. However, it may be possible to arrange either or both of the locking device 6 and the engagement means 22 with several locking projections.

Recently, a phenomenon referred to as "slamming" has been found during transport of containers on, for example, ships. Slamming means that a sudden force, e.g. as a result of a wave, acts on the containers in a direction that, unintentionally, tends to lift the containers in relation to each other or in relation to the transport vehicle. There are theories that this lifting force, under certain circumstances, may bring one or several of the coupling devices out of engagement. Hence, the containers are no longer secured in the intended manner which is a safety risk, both for personnel working on the transport vehicle but also during unloading of the containers. Furthermore, the goods transported in the containers may also be lost or damaged if the containers are not securely stacked and lashed. The containers and/or the coupling devices may also be damaged which may be costly since they may need to be repaired and/or replaced.

It may therefore also be preferred to provide the washer 5 with a weight which gives it a certain inertia against movement. If the coupling device then is subject to a sudden force which causes an unintentional rotational movement of the second engaging portion 3, the axle 30 will rotate as well. If a certain limit rotary acceleration is exceeded during the movement, the washer 5 will, due to its inertia, lag by a certain rotary angle in relation to the axle 30, and the spring 10 is extended. When the washer 5 thereafter rotates it will rotate around its axis 21, which is now in a new relative position in relation to the axle 30 because of the rotation of axle 30 and upper axle portion 8. As a result, the locking tooth 22 of the washer 5 will undergo a short rotary displacement and come into contact with the lock lug 23, which leads to an immediate locking of the axle 30 of the coupling device 1 and prevents further relative movement of the engaging portions 2,3. The elongate part 18 of the axle portion 8 is in this locking position positioned against the sidewall 20 of aperture 12. By this, the risk that the coupling device 1 according to this embodiment will loose its engagement due to the slamming phenomenon is reduced.

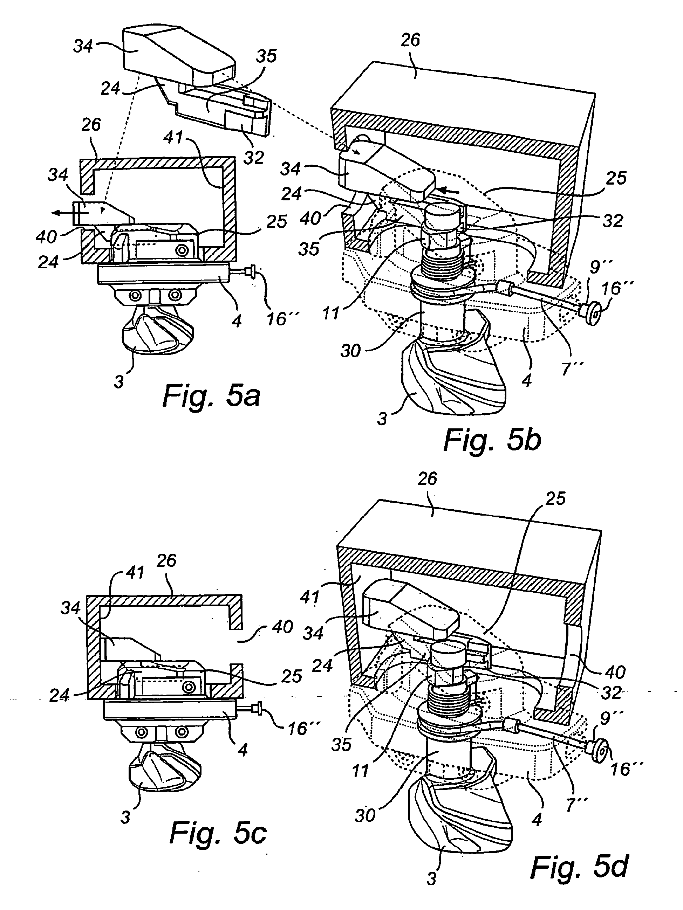

In figs 5a to 5d a third embodiment of the present invention is described. In this embodiment the housing 25 is provided with orientation means, which in this embodiment consists of a projecting nose 34. The projecting nose 34 is connected to, and in this embodiment formed in one piece, with a movable unit 24. The movable unit 24 is movable in a substantially linear path inside the housing 25. Further, the axle 30 is provided with an abutment portion 11 which is arranged above the second engaging portion 3 of the coupling device. The movable unit 24 comprises a recess 32 which allows the abutment portion 11 of the axle 30 to pass the movable unit 24 when the axle 30 rotates due to insertion or removal of the second engaging portion 3 from a corner fitting.

Corner fittings of an ordinary ISO container usually only have two side openings 40,40', positioned at adjacent walls, thereby positioning the side openings 40,40' perpendicularly in relation to each other. Due to the design of the housing 25 it is possible to insert the first engaging portion 2 into the corner fitting with two alternative orientations. The coupling device 1 is rotated 180° between the two alternative orientations. In a first orientation, shown in figs 5a and 5b, the nose 34 is positioned against one of the side openings 40 of the corner fitting 26, and the nose 34 may therefore protrude through the side opening 40. When the coupling device 1 is arranged in this position, the recess 32 of the movable unit 24 is positioned such that the abutment portion 11 of the axle 30 is able to rotate during insertion and removal of the second engaging portion 3 without abutting the movable unit 24. Hence, with the coupling device 1 arranged in this position, the function of the coupling device 1 will be fully automatic.

However, as shown in figs 5c and 5d, if the coupling device 1 is rotated 180° as compared to figs 5a and 5b, when inserted into the first corner fitting 26 the projecting nose 34 has no side opening to protrude through and it will therefore abut a side wall 41 of the corner fitting 26. Since the projecting nose 34 abuts a side wall 41, the movable unit 24 will be forced to make a linear displacement. By this, the projecting nose 34 functions as an orientation means. The linear displacement is such that an abutment portion 35 of the movable unit 24 becomes positioned adjacent the axle 30. When the second engaging portion 3 rotates, as when the second engaging portion 3 is removed from its corner fitting 28, the abutment portion 11 of the axle 30 will abut the abutment portion 35 of the movable unit 24. Hence, further rotation of the axle 30 and, consequently, of the second engaging portion 3 will be prevented.

When a coupling device 1 according to this third embodiment has been positioned in a locked condition, the second engaging portion 3 is prevented from achieving the desired rotation for removing of the second engaging portion 3 from the corner fitting 28. In order for the second engaging portion 3 to be removable from the corner fitting, maneuvering means 16" are provided. In this embodiment, the maneuvering means 16" comprises a wire 7" which is connected to the axle 30 and an end portion 9" which is positioned outside the section 4 of the housing 25 in such a manner that an operator may be able to maneuver the maneuvering means 16". When operated, the maneuvering means 16" brings the second engaging portion 3 to rotate clock-wise, seen from below of the coupling device 1. The clock-wise rotation of the second engaging portion 3 brings it to a fully open condition in which it may be removed from the corner fitting without further rotation of the second engaging portion 3.

The third embodiment of the present invention has been shown with an abutment portion 11, which is intended to abut the movable unit 24 upon rotation of the second engaging portion 3 when the coupling device 1 is arranged in a locked condition. However, it is also possible to alter the configuration of the axle 30 such that it comprises at least one portion which is not circular. This may for example be achieved by providing a cut-out, which may be substantially planar, of the side of the axle 30 that is facing the movable unit 24. The movable unit 24 in this fourth embodiment comprises a protruding nose 34 similar to the nose 34 in the third embodiment, but the part of the movable unit 24 inside the housing 25 may be shorter. When the coupling device 1 is inserted into the corner fitting in such a manner that the nose 34 may protrude through a side opening 40 of a corner fitting, the movable unit 24 does not interfere with the movement of the axle 30. However, when the coupling device 1 is arranged in such a manner that the projecting nose 34 abuts a side wall 41 of the corner fitting the movable unit 24 will be displaced so that is becomes positioned adjacent the cut-out portion of the axle 30. When a force on the second engaging portion 3 thereafter acts to bring the axle 30 to rotation, the rotation will be prevented by abutment of the substantially planar surface of the axle 30 with the movable unit 24. Because of the abutment between the cut-out portion of the axle 30 and the movable unit 24, the axle 30 in this fourth embodiment does not need to be provided with an abutment portion 11.

As in the third embodiment, maneuvering means 16'' are provided which when maneuvered by an operator brings the second engaging portion 3 to a fully open condition, so that the second engaging portion 3 may be brought out of its engagement with the corner fitting, without any further rotation.

The projecting nose 34, in both the third and fourth embodiment, may be arranged with spring means (not shown) which acts to position the nose 34 in its most protruding position. By this, the nose 34 will have a condition, when unaffected by external forces such as side wall 41, in which the coupling device 1 is positioned in its automatic condition.

A side opening 40,40' of a corner fitting may sometimes be utilized for insertion of equipment such as turnbuckles, lashing bars and the like into the corner fitting when a coupling device 1 is positioned in the corner fitting. The turnbuckles, lashing bars and the like may after insertion through the side opening 40,40' engage the sidewall of the corner fitting that surrounds the side opening. Hence, this zone may function both as an entrance zone and an engagement zone for the turnbuckles and lashing bars. In order to enable the insertion of equipment into the zone, there may exist a need of clearing this zone, such that no parts of the coupling device 1 is positioned there, at least during certain periods of time. In order to enable this, it is possible to temporarily, i.e. when the coupling device 1 is positioned in the corner fitting and is not intended to be removed, position the movable unit 24 in the position where it prevents the rotational movement of the axle 30. This may clear the entrance/engagement zone. When it is desirable to remove the coupling device 1 from the corner fitting, the lashing bars, turnbuckles and so on may be removed first and the nose 34 may thereafter alter position so that it once again protrudes through the side opening and the axle 30 may thereafter rotate, and the second engaging portion 3 may brought out of the corner fitting 28.

Since a common corner fitting usually comprises two side openings it is in both the third and fourth embodiment described above possible to arrange the nose 34 turned 90° from what has been shown. In that case, the nose 34 may protrude through the side opening 40' when the coupling device 1 is arranged in its fully automatic condition in a corner fitting.

Although the present invention has been described in connection with particular embodiments thereof, it is to be understood that various modifications, alterations and adaptations may be made by those skilled in the art without departing from the scope of the invention being defined by the claims.

It is also possible to combine the different embodiments without falling outside the scope of the invention. For example, it is possible to combine the first and the second embodiment in order to provide for a coupling device which both may be altered between an automatic and a locked condition, and also has means for not loosing engagement due to slamming. In this combination, the means for enabling tandem lifting and prevention of slamming may be arranged as different units. Another example that is also possible is to combine the movable unit of the third and the fourth embodiment with the means which acts to limit the potential damage of slamming. In that case, the lock lug 23 may be arranged on the movable unit so that in the case of slamming, locking tooth 22 engages the movable unit. Upon this engagement the movable unit may be linearly displaced and the abutment portion 11 may abut the abutment portion 34 of the movable unit. By this, the axle 30 will not be able to rotate as a result of slamming. A third possible example is to rotate the second engaging portion 3 in such a manner that the substantially horizontal surfaces 38,38' faces the inner surfaces surrounding the engagement opening of the corner fitting depending on the orientation of the coupling device. It may in this case be favorable to utilize the projecting nose 34 to distinguish the orientation of the coupling device. Other feasible combinations is of course also possible.

Furthermore, the upper axle portion 8 and the washer 5 and its attached engagement means 22 of the second embodiment may be arranged in any alternative manner that provides for a limited angular movement for the engagement means about an eccentric axis. Furthermore, the engagement means does not need to have a rotatable movement. The movement may as well be a linear axial or radial displacement movement which brings the engagement means into engagement with a locking device when unintentional relative movement of the first and second engaging portions take place.

The coupling device 1 has been illustrated with a housing. It is however not a necessary design and if a housing is present, it may be shaped in many alternative ways. It may not even need to be a housing present, since the first engaging portion 2 may have a similar shape as the second engaging portion 3.

The maneuvering means and the connection between them and the second engaging portion or the axle may further be designed in any suitable alternative manner.

## Claims

1. A method for enabling simultaneous lifting of two containers (27,29) interconnected with a coupling device (1), wherein said coupling device (1) comprises two engaging portions (2,3) each adapted to be at least partially inserted into a corner fitting of a respective container, wherein said coupling device (1) is provided with an automatic condition, in which automatic condition said engaging portions (2,3) are adapted to engage said corner fitting (26,28) for holding said coupling device (1) in said corner fitting (26,28) and wherein said coupling device (1) further is adapted to upon a prescribed relative movement between said containers (27,29) allow removing of at least one of said engaging portions (2,3) from its respective corner fitting, said method comprising:
- interconnecting said containers (27,29) by means of said coupling device
- activating a means adapted for alternating said coupling device (1) between said automatic condition and a locked condition, in which locked condition said containers will remain interconnected,
wherein said means adapted for alternating said coupling device between said automatic condition and said locked condition is maneuvering means (16, 16', 16") comprised in said coupling device (1), said method further comprises:
- manual maneuvering of said maneuvering means (16, 16', 16") for alternation.

2. A method according to claim 1, wherein said activating of said means adapted for alternating said condition of said coupling device (1) is executed when said second engaging portion (3) has been inserted into said second corner fitting (27).

3. A method according to any one of claims 1 to 2, wherein at least one of said first and second engaging portions (2,3) of said coupling device (1) is rotating during removal of said engaging portion from said corner fitting.

4. A method according to claim 3, wherein said maneuvering of at least one of said first and second engaging portions (2,3) to a locked condition from an automatic condition comprises rotating said engaging portion in the opposite direction from that which said engaging portion is subject to during removal of said engaging portion from said corner fitting.

5. A method according to claim 4, wherein said rotation of said engaging portion in said direction opposite that direction in which said engaging portion is rotating during removal of said engaging portion from said corner fitting positions said engaging portion such that rotation is prevented in the removing direction when an external force is exerted upon said engaging portion.

6. A method according to any one of claims 1 to 5, further comprising arranging said two containers vertically in relation to each other, such that said coupling device (1) is engaged into a lower corner fitting of an upper container and an upper corner fitting of a lower container.

7. A method according to any one of claims 1 to 6, further comprising lifting of a top container by means of a crane, wherein at least one interconnected lower container is lifted due to said interconnection between said upper and lower containers.

8. A coupling device (1) comprising at least a first and a second engaging portion (2,3), wherein said first and second engaging portions (2,3) are adapted to be inserted into respective first and second corner fittings (26,28) provided on a first and a second container (27,29), respectively, wherein said coupling device (1) has an automatic condition, wherein in said automatic condition at least one of said first and second engaging portions (2,3) is arranged to engage a corner fitting for holding said coupling device (1) in said corner fitting and wherein at least one of said engaging portions (2,3) upon a prescribed relative movement between said containers (27,29) being removable from its corner fitting, **characterized in that** means is provided for alternation of condition of said coupling device (1) between said automatic condition and a locked condition, wherein at least one of said engaging portions (2,3) of said coupling device (1) will remain engaged with said corner fitting when arranged in said locked condition, and wherein said means is maneuvering means (16, 16', 16") for manually maneuvering said alternation.

9. A coupling device (1) according to claim 8, wherein at least one of said first and second engaging portions (2,3) is arranged for rotation during removal from a corner fitting, wherein said means for arranging said coupling device (1) in a locked condition is arranged to prevent said rotational movement of at least one of said first and second engaging portions (2,3).

10. A coupling device (1) according to any one of claims 8 to 9, wherein said coupling device (1) comprises a housing (25), wherein said second engaging portion (3) is rotably mounted in relation to said housing (25) by means of a shaft portion (30) extending into the housing (25), wherein said second engaging portion (3) has a guide part (45) for guiding the engaging portion (3) with said corner fitting (28), wherein said guide part (45) having a translation guide path for guiding the engaging portion (3) in relation to said corner fitting (28) in a horizontal direction, which translation guide path is rotational asymmetric in relation to an axis of said shaft portion (30), and wherein said guide part (45) having a rotational guide path for rotation of the engaging portion (3).

11. A coupling device (1) according to claim 8, wherein said maneuvering means (16) is arranged to rotate said second engaging portion (3) such that at least one substantially horizontal surface (38,38') of said second engaging portion (3) is directed towards an inner surface surrounding an engagement opening of said corner fitting (28), for achieving said locked condition.

12. A coupling device (1) according to any one of claims 8 to 11,
wherein said coupling device (1) comprises a locking device (6), wherein said locking device (6) being fixed arranged in relation to said coupling device, and a engagement means (22), wherein said engagement means (22) is rotatably arranged in relation to said locking device (6), wherein said alteration of condition between automatic and locked condition of said coupling device (1) is obtained when said maneuvering means (16') prevents the rotation of said engagement means (22).

13. A coupling device (1) according to any one of claims 8 to 12, wherein said coupling device (1) is provided with orientation means (34), wherein said orientation means (34) may activate said prevention of said rotation of said second engaging portion (3) depending on the orientation of said coupling device (1) in a corner fitting.

## Patentansprüche

1. Verfahren zum gleichzeitigen Anheben zweier Behälter (27, 29), die mit einer Verbindungsvorrichtung (1) miteinander verbunden sind, wobei die Verbindungsvorrichtung (1) zwei Eingriffsabschnitte (2, 3) umfasst, die jeder dazu geeignet sind, zumindest teilweise in eine Eckarmatur eines jeweiligen Behälters zu passen, wobei die Verbindungsvorrichtung (1) mit einem automatischen Zustand versehen ist, wobei die Eingriffsabschnitte (2, 3) in dem automatischen Zustand dazu geeignet sind, die Eckarmatur (26, 28) zum Halten der Verbindungsvorrichtung (1) in der Eckarmatur (26, 28) in Eingriff zu nehmen, und wobei die Verbindungsvorrichtung (1) ferner dazu geeignet ist, auf eine vorgegebene relative Bewegung zwischen den Behältern (27, 29) hin das Entfernen von zumindest einem der Eingriffsabschnitte (2, 3) aus seiner jeweiligen Eckarmatur zu ermöglichen, das Verfahren umfassend:
- Verbinden der Behälter (27, 29) miteinander mithilfe der Verbindungsvorrichtung,
- Aktivieren eines Mittels, das zum Wechseln der Verbindungsvorrichtung (1) zwischen dem automatischen Zustand und einem Sperrzustand geeignet ist, wobei die Behälter in dem Sperrzustand miteinander verbunden bleiben,
wobei das Mittel, das zum Wechseln der Verbindungsvorrichtung zwischen dem automatischen Zustand und dem Sperrzustand geeignet ist, ein Manövriermittel (16, 16', 16") ist, das in der Verbindungsvorrichtung (1) enthalten ist, wobei das Verfahren ferner umfasst:
- manuelles Manövrieren des Manövriermittel (16, 16', 16") zum Wechseln.

2. Verfahren nach Anspruch 1, wobei das das Aktivieren des Mittels, das zum Wechseln des Zustands der Verbindungsvorrichtung (1) geeignet ist, ausgeführt wird, wenn der zweite Eingriffsabschnitt (3) in die zweite Eckarmatur (28) eingeführt wurde.

3. Verfahren nach einem der Ansprüche 1 bis 2, wobei zumindest einer des ersten und zweiten Eingriffsabschnitte (2, 3) der Verbindungsvorrichtung (1) während des Entfernens des Eingriffsabschnitts aus der Eckarmatur dreht.

4. Verfahren nach Anspruch 3, wobei das Manövrieren von zumindest einem des ersten und zweiten Eingriffsabschnitts (2, 3) aus einem automatischen Zustand in einen Sperrzustand das Drehen des Eingriffsabschnitts in der Gegenrichtung zu jener umfasst, der der Eingriffsabschnitt beim Entfernen des Eingriffsabschnitts aus der Eckarmatur unterzogen ist.

5. Verfahren nach Anspruch 4, wobei die Drehung des Eingriffsabschnitts in der Gegenrichtung zu der Richtung, in der der Eingriffsabschnitt beim Entfernen des Eingriffsabschnitts aus der Eckarmatur dreht, derart ist, dass Drehung in der Entfernungsrichtung verhindert wird, wenn eine Kraft von außen auf den Eingriffsabschnitt ausgeübt wird.

6. Verfahren nach einem der Ansprüche 1 bis 5, ferner umfassend das derartige vertikale Anordnen der zwei Behälter in Bezug zueinander, dass die Verbindungsvorrichtung (1) in eine untere Eckarmatur eines oberen Behälters und eine obere Eckarmatur eines unteren Behälters in Eingriff gebracht wird.

7. Verfahren nach einem der Ansprüche 1 bis 6, ferner umfassend das Anheben eines oberen Behälters mithilfe eines Krans, wobei zumindest ein verbundener unterer Behälter aufgrund der Verbindung zwischen den oberen und unteren Behältern angehoben wird.

8. Verbindungsvorrichtung (1), umfassend zumindest einen ersten und einen zweiten Eingriffsabschnitt (2, 3), wobei der erste und zweite Eingriffsabschnitt (2, 3) dazu geeignet sind, in eine jeweilige erste und zweite Eckarmatur (26, 28) eingefügt zu sein, die an einem ersten bzw. einem zweiten Behälter (27, 29) vorgesehen sind, wobei die Verbindungsvorrichtung (1) einen automatischen Zustand aufweist, wobei in dem automatischen Zustand zumindest einer des ersten und zweiten Eingriffsabschnitts (2, 3) zum Eingreifen in eine Eckarmatur zum Halten der Verbindungsvorrichtung (1) in der Eckarmatur angeordnet ist, und wobei zumindest einer des ersten und zweiten Eingriffsabschnitts (2, 3) auf eine vorgegebene Bewegung zwischen den Behältern (27, 29) hin aus seiner Eckarmatur entfernbar ist, **dadurch gekennzeichnet, dass** ein Mittel zum Wechseln des Zustands der Verbindungsvorrichtung (1) zwischen dem automatischem Zustand und einem Sperrzustand vorgesehen ist, wobei zumindest einer der Eingriffsabschnitte (2, 3) der Verbindungsvorrichtung (1) bei Anordnung in dem Sperrzustand mit der Eckarmatur in Eingriff verbleibt, und wobei das Mittel ein Manövriermittel (16, 16', 16") zum manuellen Manövrieren des Wechselns ist.

9. Verbindungsvorrichtung (1) nach Anspruch 8, wobei zumindest einer des ersten und zweiten Eingriffsabschnitts (2, 3) zum Drehen während des Entfernens aus einer Eckarmatur angeordnet ist, wobei das Mittel zum Anordnen der Verbindungsvorrichtung (1) in einem Sperrzustand zum Verhindern der Drehbewegung von zumindest einem des ersten und zweiten Eingriffsabschnitts (2, 3) angeordnet ist.

10. Verbindungsvorrichtung (1) nach einem der Ansprüche 8 bis 9, wobei die Verbindungsvorrichtung (1) ein Gehäuse (25) umfasst, wobei der zweite Eingriffsabschnitt (3) drehbar bezüglich des Gehäuses (25) mithilfe eines Wellenabschnitts (30), der sich in das Gehäuse (25) erstreckt, angebracht ist, wobei der zweite Eingriffsabschnitt (3) ein Führungsteil (45) zum Führen des Eingriffsabschnitts (3) mit der Eckarmatur (28) aufweist, wobei das Führungsteil (45) einen Translationsführungsweg zum Führen des Eingriffsabschnitts (3) bezüglich der Eckarmatur (28) in einer horizontalen Richtung aufweist, wobei der Translationsführungsweg drehasymmetrisch bezüglich einer Achse des Wellenabschnitts (30) ist, und wobei das Führungsteil (45) einen Drehführungsweg zur Drehung des Eingriffsabschnitts (3) aufweist.

11. Verbindungsvorrichtung (1) nach Anspruch 8, wobei das Manövriermittel (16), zum derartigen Drehen des zweiten Eingriffsabschnitts (3) angeordnet ist, dass zumindest eine im Wesentlichen horizontale Oberfläche (38, 38') des zweiten Eingriffsabschnitts (3) zu einer Innenfläche hin gerichtet ist, die eine Eingriffsöffnung der Eckarmatur (28) umgibt, um den Sperrzustand zu erzielen.

12. Verbindungsvorrichtung (1) nach einem der Ansprüche 8 bis 11, wobei die Verbindungsvorrichtung (1) eine Sperrvorrichtung (6) umfasst, wobei die Sperrvorrichtung (6) starr bezüglich der Verbindungsvorrichtung angeordnet ist, und ein Eingriffsmittel (22), wobei das Eingriffsmittel (22) drehbar bezüglich der Sperrvorrichtung (6) angeordnet ist, wobei der Zustandswechsel zwischen automatischem und Sperrzustand der Verbindungsvorrichtung (1) erhalten ist, wenn das Manövriermittel (16') die Drehung des Eingriffsmittels (22) verhindert.

13. Verbindungsvorrichtung (1) nach einem der Ansprüche 8 bis 12, wobei die Verbindungsvorrichtung (1) mit einem Ausrichtungsmitteln (34) versehen ist, wobei das Ausrichtungsmittel (34) das Verhindern der Drehung des zweiten Eingriffsabschnitts (3) abhängig von der Ausrichtung der Verbindungsvorrichtung (1) in einer Eckarmatur in Gang setzen kann.

## Revendications

1. Procédé permettant de soulever simultanément deux conteneurs (27, 29) interconnectés avec un dispositif d'accouplement (1), dans lequel ledit dispositif d'accouplement (1) comprend deux portions d'engagement (2, 3) respectivement adaptées pour être au moins partiellement insérées dans un raccord de coin d'un conteneur respectif, dans lequel ledit dispositif d'accouplement (1) est doté d'un état automatique, dans lequel lesdites portions d'engagement (2, 3) sont adaptées pour engager ledit raccord de coin (26, 28) afin de maintenir ledit dispositif d'accouplement (1) dans ledit raccord de coin (26, 28), et dans lequel ledit dispositif d'accouplement (1) est en outre adapté pour permettre le retrait d'au moins l'une desdites portions d'engagement (2, 3) hors de son raccord de coin respectif lors d'un certain mouvement relatif déterminé entre lesdits conteneurs (27, 29), ledit procédé comprenant :
- l'interconnexion desdits conteneurs (27, 29) au moyen dudit dispositif d'accouplement,
- l'activation d'un moyen adapté pour faire passer ledit dispositif d'accouplement (1) entre ledit état automatique et un état verrouillé, lesdits conteneurs restant interconnectés dans ledit état verrouillé,
dans lequel ledit moyen adapté pour faire passer ledit dispositif d'accouplement entre ledit état automatique et ledit état verrouillé est un moyen de commande (16, 16', 16") compris dans ledit dispositif d'accouplement (1), ledit procédé comprenant en outre :
- la commande manuelle dudit moyen de commande (16, 16', 16") pour la commutation.

2. Procédé selon la revendication 1, dans lequel ladite activation dudit moyen adapté pour modifier ledit état dudit dispositif d'accouplement (1) est exécutée une fois que ladite deuxième portion d'engagement (3) a été insérée dans ledit deuxième raccord de coin (28).

3. Procédé selon l'une quelconque des revendications 1 à 2, dans lequel au moins l'une parmi les première et deuxième portions d'engagement (2, 3) dudit dispositif d'accouplement (1) effectue une rotation pendant le retrait de ladite portion d'engagement hors dudit raccord de coin.

4. Procédé selon la revendication 3, dans lequel ledit passage d'au moins l'une desdites première et deuxième portions d'engagement (2, 3) de l'état automatique vers l'état verrouillé comprend ladite rotation de ladite portion d'engagement dans la direction opposée à celle observée par ladite portion d'engagement pendant le retrait de ladite portion d'engagement hors dudit raccord de coin.

5. Procédé selon la revendication 4, dans lequel ladite rotation de ladite portion d'engagement dans la direction opposée à cette direction dans laquelle la portion d'engagement tourne pendant le retrait de ladite portion d'engagement hors dudit raccord de coin permet de positionner ladite portion d'engagement de manière à ce que la rotation soit empêchée dans la direction de retrait, lorsqu'une force externe est exercée sur ladite portion d'engagement.

6. Procédé selon l'une quelconque des revendications 1 à 5, comprenant en outre l'agencement de deux conteneurs verticalement l'un par rapport à l'autre, de sorte que ledit dispositif d'accouplement (1) est engagé dans un raccord de coin inférieur d'un conteneur supérieur, et dans un raccord de coin supérieur d'un conteneur inférieur.

7. Procédé selon l'une quelconque des revendications 1 à 6, comprenant en outre le levage d'un conteneur supérieur au moyen d'une grue, dans lequel au moins un conteneur inférieur interconnecté est soulevé du fait de ladite interconnexion entre lesdits conteneurs inférieur et supérieur.

8. Dispositif d'accouplement (1) comprenant au moins une première et une deuxième portion d'engagement (2, 3), dans lequel lesdites première et deuxième portions d'engagement (2, 3) sont adaptées pour être insérées dans les raccords de coin (26, 28) respectifs prévus sur un premier et un deuxième conteneur (27, 29), respectivement, dans lequel ledit dispositif d'accouplement (1) dispose d'un état automatique, dans lequel au moins l'une desdites première et deuxième portions d'engagement (2, 3) est conçue pour engager un raccord de coin afin de maintenir ledit dispositif d'accouplement (1) dans le raccord de coin, et dans lequel au moins l'une desdites portions d'engagement (2, 3) peut être retirée de son raccord de coin lors d'un certain mouvement relatif déterminé entre lesdits conteneurs (27, 29), **caractérisé en ce qu'**il est prévu un moyen permettant de faire commuter l'état dudit dispositif d'accouplement (1), entre ledit état automatique et un état verrouillé, dans lequel au moins l'une desdites portions d'engagement (2, 3) dudit dispositif d'accouplement (1) restera engagée avec ledit raccord de coin lors de l'agencement dans l'état verrouillé, et dans lequel ledit moyen est un moyen de commande (16, 16', 16") permettant de commander manuellement ladite commutation.

9. Dispositif d'accouplement (1) selon la revendication 8, dans lequel au moins l'une desdites première et deuxième portions d'engagement (2, 3) est agencée pour effectuer une rotation pendant le retrait hors d'un raccord de coin, dans lequel ledit moyen pour mettre ledit dispositif d'accouplement (1) dans un état verrouillé est agencé pour empêcher ledit mouvement de rotation d'au moins l'une desdites première et deuxième portions d'engagement (2, 3).

10. Dispositif d'accouplement (1) selon l'une quelconque des revendications 8 à 9, dans lequel ledit dispositif d'accouplement (1) comprend un boîtier (25), dans lequel ladite deuxième portion d'engagement (3) est montée de façon rotative par rapport audit boîtier (25), au moyen d'une portion de tige (30) qui s'étend à l'intérieur du boîtier (25), dans lequel ladite deuxième portion d'engagement (3) possède une pièce de guidage (45) pour guider la portion d'engagement (3) avec ledit raccord de coin (28), dans lequel ladite pièce de guidage (45) comprend un trajet de guidage par translation, pour guider la portion d'engagement (3) par rapport audit raccord de coin (28) dans une direction horizontale, ledit trajet de guidage de translation étant asymétrique en rotation par rapport à un axe de ladite portion de tige (30), et dans lequel ladite pièce de guidage (45) comporte un trajet de guidage rotatif pour la rotation de la portion d'engagement (3).

11. Dispositif d'accouplement (1) selon la revendication 8, dans lequel ledit moyen de commande (16) est conçu pour faire tourner ladite deuxième portion d'engagement (3) de manière à ce qu'au moins une surface substantiellement horizontale (38, 38') de ladite deuxième portion d'engagement (3) soit dirigée vers une surface intérieure encerclant une ouverture d'engagement dudit raccord de coin (28), afin d'atteindre ledit état verrouillé.

12. Dispositif d'accouplement (1) selon l'une quelconque des revendications 8 à 11, dans lequel ledit dispositif d'accouplement (1) comprend un dispositif de verrouillage (6), dans lequel ledit dispositif de verrouillage (6) est disposé fixement par rapport audit dispositif d'accouplement, et un moyen d'engagement (22), dans lequel ledit moyen d'engagement (22) est agencé de façon rotative par rapport audit dispositif de verrouillage (6), dans lequel ledit changement d'état entre l'état automatique et l'état verrouillé dudit dispositif d'accouplement (1) est atteint lorsque ledit moyen de commande (16') empêche la rotation dudit moyen d'engagement (22).

13. Dispositif d'accouplement (1) selon l'une quelconque des revendications 8 à 12, dans lequel ledit dispositif d'accouplement (1) est pourvu d'un moyen d'orientation (34), dans lequel ledit moyen d'orientation (34) peut activer ledit empêchement de ladite rotation de ladite deuxième portion d'engagement (3) en fonction de ladite orientation dudit dispositif d'accouplement (1) dans un raccord de coin.
